# EUROPEAN PATENT APPLICATION

(11) **EP 1 933 203 A2**
(43) Date of publication of application: **18.06.2008**
(21) Application number: 07022593.3
(22) Date of filing: 21.11.2007
(51) Int. Cl.: G03B 21/20

(54) **Lamp module**

(30) Priority: 22.11.2006 JP 2006315095
(71) Applicant: Funai Electric Co., Ltd., Daito-shi Osaka 574-0013 (JP)
(72) Inventor: Ochi, Masaki, Daito-shi Osaka 574-0013 (JP)
(74) Representative: Beetz & Partner

(57) **Abstract**

A lamp cover (4) includes a main plate portion (4a) which faces a right side surface of a lamp casing (2) and an upper side-plate portion (4b) and a lower side-plate portion (4c) which overlap an upper side surface and a lower side surface of the lamp casing (2) arranged adjacent to the right side surface of the lamp casing (2). A projection (3d) which is formed on a front-surface member (3) is brought into contact with an outer side of a front periphery of the main plate portion (4a). The upper side-plate portion (4b) and a rear portion of the upper side surface of the lamp casing (2) which the upper side-plate portion (4b) overlaps are fastened to each other by screws (8). Further, the upper side-plate portion (4b) and a front portion of the upper side surface of the lamp casing (2) which the upper side plate portion (4b) overlaps are fastened together by screws (6) by way of an insulation plate (5).

## Description

### BACKGROUND OF THE INVENTION

### Field of the Invention

The present invention relates to a lamp module for a projector.

### Description of the Related Art

A projector is a device for performing a display by projecting an image on a screen or the like. As such a projector, a liquid crystal projector which makes use of a liquid crystal panel, a DLP (Digital Light Processing) projector which makes use of a DMD (Digital Micromirror Device) and the like have been known as typical examples. The projector requires a light source lamp which emits light as an indispensable part thereof. Such a lamp is installed in the inside of a projector body as a lamp module. When the lamp module runs out, the lamp module is exchanged with a new lamp module.

Conventionally, in the lamp module of a general type, a lamp is held in a state that the lamp is housed in a lamp casing which is a resin formed product, a sheet-metal formed product or the like (for example, see patent documents 1, 2). Here, during driving of the projector, the inside of the lamp casing assumes a high temperature due to heat generated from the lamp and hence, air is made to flow into the inside of the lamp casing so as to cool the lamp.

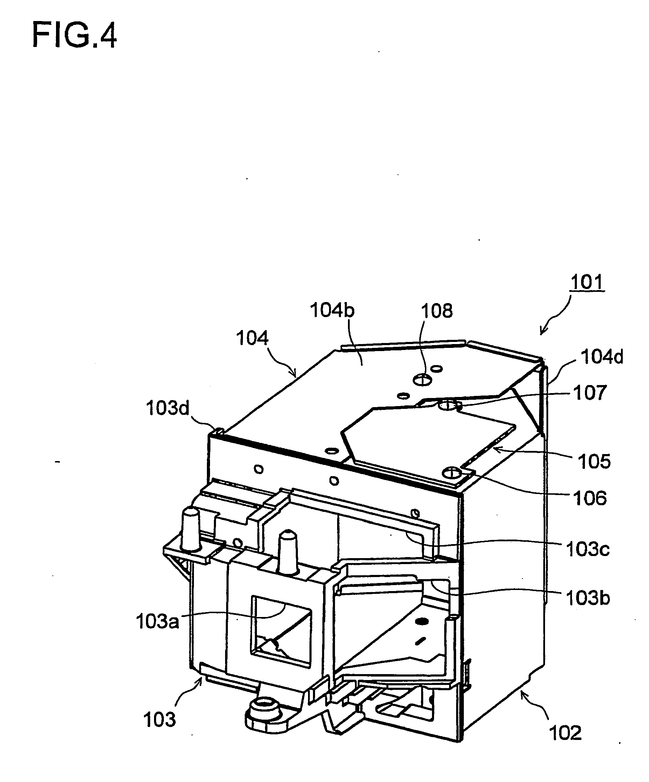

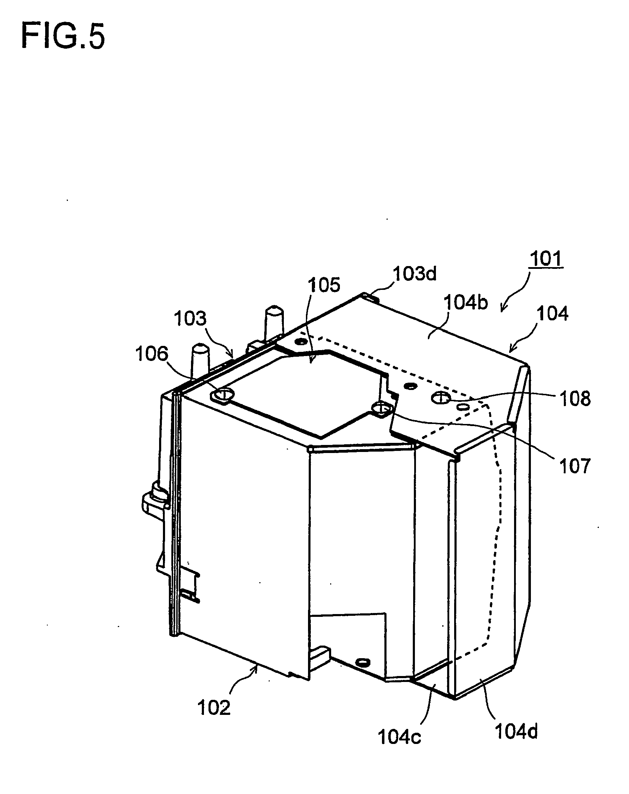

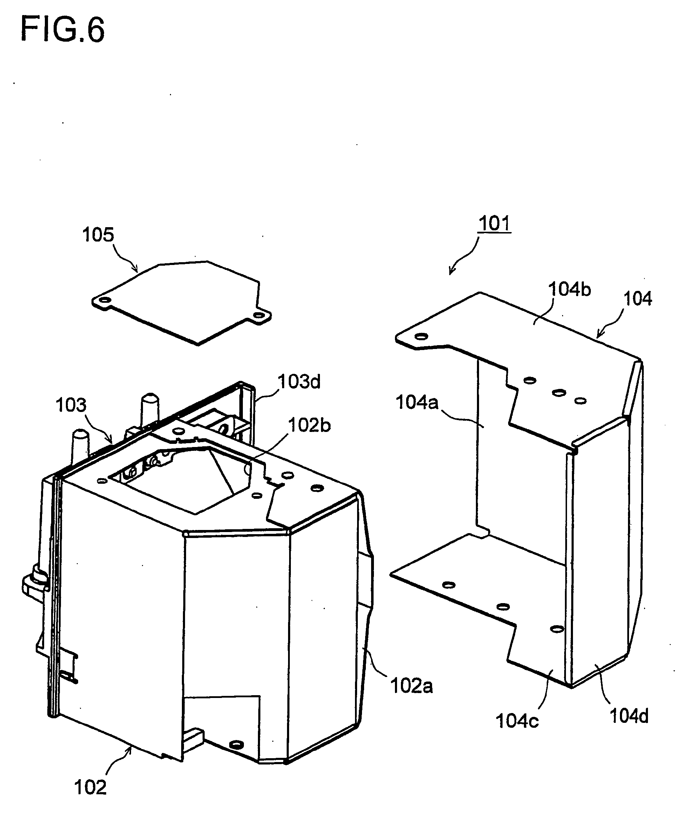

Fig. 4 to Fig. 6 show one example of a conventional lamp module 101 which includes the lamp cooling structure. The lamp module 101 includes a lamp casing 102, a front-surface member 103 which is mounted on a front surface (a left viewer's-side surface in Fig. 4, and a left depth-side surface in Fig. 5 and Fig. 6) of the lamp casing 102, and a lamp cover 104 which covers one side surface, for example, a right side surface (a left-depth-side surface in Fig. 4, and a right-depth-side surface in Fig. 5 and Fig. 6) of the lamp casing 102, for example.

The lamp casing 102 holds a light source lamp (not shown in the drawing) by housing the light source lamp therein. Here, the lamp casing 102 is formed of a sheet-metal formed product. Particularly, the lamp casing 102 is formed by laterally combining a pair of individual sheet-metal-formed parts. Further, the lamp casing 102 opens a front surface thereof and forms a gap 102a which is communicated with the inside and the outside by bulging a right-side surface thereof toward the outside in the back surface of the lamp casing 102 (see Fig. 6).

Further, the lamp casing 102 has an opening 102b in one of two, upper and lower surfaces which are arranged adjacent to the right-side surface covered with the lamp cover 104, for example, the upper surface (the upper-side surface in Fig. 4 to Fig. 6). In the vicinity of the opening 102b, that is, in the inside of the lamp casing 102 and in the vicinity of the upper surface, a connection terminal of the lamp is arranged. Accordingly, to ensure an insulation distance with respect to the connection terminal in view of requirements for safety standard, the opening 102b is formed. The opening 102b is covered with an insulation plate 105. The insulation plate 105 and the upper surface of the lamp casing 102 in which the opening 102b is formed are fastened to each other using a screw 106 which is positioned at a left end of a front portion of the insulation plate 105 and a screw 107 which is positioned at a rear portion of the insulation plate 105.

The front-surface member 103 has a substantially rectangular frame shape. A radiation opening 103a for light emitted from the light source lamp is formed in an approximately frame-like center portion of the front-surface member 103 in a state that the radiation opening 103a projects slightly frontwardly. The front-surface member 103 is a metal injection molded product. Further, behind the front-surface member 103, the lamp casing 102 is arranged in a leftwardly offset manner, and the front-surface member 103 and the lamp casing 102 are fastened to each other using screws (not shown in the drawings). Further, in the front-surface member 103, on the respective left and upper sides of the radiation opening 103a, a first ventilation port 103b and a second ventilation port 103c for introducing air into the inside of the lamp casing 102 are formed.

The lamp cover 104 is a metal-sheet formed product. Here, the lamp cover 104 includes a main plate portion 104a which faces the right-side surface of the lamp casing 102 with a predetermined distance therebetween, and an upper-side plate portion 104b and a lower-side plate portion 104c which respectively overlap two side surfaces which are arranged adjacent to the right-side surface of the lamp casing 102, that is, upper and lower side surfaces of the lamp casing 102. Rear portions of the main plate portion 104a, the upper-side plate portion 104b and the lower-side plate portion 104c are closed by a back plate portion 104d. Further, a predetermined distance is defined between the back plate portion 104d and a rear surface of the lamp casing 102. As a matter of course, the upper-side plate portion 104b of the lamp cover 104 which is positioned above the upper-side surface of the lamp casing 102 on which the insulation plate 105 is mounted overlaps the lamp casing 102 along a right periphery of the upper-side surface of the lamp casing 102 so as to prevent the upper side-plate portion 104b of the lamp cover 104 from overlapping the insulation plate 105.

Further, on a back surface of the front-surface member 103, a projection 103d which extends along the right side periphery of the front-surface member 103 and projects rearwardly is formed. Then, the lamp casing 102 which mounts the front-surface member 103 thereon and the lamp cover 104 are temporarily assembled in such a manner that while bringing the main plate portion 104a, the upper-side plate portion 104b and the lower-side plate portion 104c of the lamp cover 104 into contact with the back surface of the front-surface member 103, the outer side of a front periphery of the main plate portion 104a is applied to the projection 103d of the front-surface member 103. Then, the upper-side plate portion 104b and the rear portion of the upper-side surface of the lamp casing 102 which overlaps the upper-side plate portion 104b are fastened to each other using a screw 108. Further, another lower-side plate portion 104c of the lamp cover 104 and a rear portion of the lower-side surface of the lamp casing 102 which overlaps another lower-side plate portion 104c are fastened to each other using a screw not shown in the drawing. Due to the above-mentioned fastening, the lamp cover 104 is mounted on the lamp casing 102.

In such a lamp module 101, air which is sucked into the inside of the projector body from the outside during driving of the projector is introduced into the inside of the lamp casing 102 through the first ventilation port 103b and the second ventilation port 103c formed in the front-surface member 103 due to a fan, a blower or the like. The introduced air flows around the lamp, and is led to the back plate portion 104d of the lamp cover 104 through the gap 102a formed in the rear surface of the lamp casing 102. Along with such an air flow, air flows from the front side to the rear side between the right-side surface of the lamp casing 102 and the main plate portion 104a of the lamp cover 104, and is led to a space defined between the rear surface of the lamp casing 102 and the back plate portion 104d of the lamp cover 104. In such a process, air deprives heat from the lamp and the lamp casing 102 and generates hot air. Then, the hot air which is led to a space defined between the rear surface of the lamp casing 102 and the back plate portion 104d of the lamp cover 104 is discharged to the outside by a fan or the like. The lamp is cooled in this manner.
Patent Document 1: JP-A-2005-208410
Patent Document 2: JP-A-8-262573

Here, in the lamp module 101, the lamp cover 104 is a metal-sheet formed product and hence, the lamp cover 104 per se is liable to be easily warped or deformed. Accordingly, for example, when the upper-side plate portion 104b of the lamp cover 104 which overlaps the upper-side surface of the lamp casing 102 is warped, a front portion of the upper-side plate portion 104b is not constrained at all. Accordingly, the upper-side plate portion 104b floats from the upper-side surface of the lamp casing 102 with the rear portion thereof fastened by the screw 108 as a fulcrum. As a result, a gap is formed between the front portion of the upper-side plate portion 104b of the lamp cover 104 and the upper-side surface of the lamp casing 102. In such a case, hot air which flows from the front side to the rear side between the right-side surface of the lamp casing 102 and the main plate portion 104a of the lamp cover 104 leaks through the gap inadvertently without passing through an expected path. As a result, parts arranged in the vicinity of the gap are ill-affected attributed to the leaked air.

As an example of the part which is ill-affected, a temperature sensor which performs an emergent stop of the projector in response to the excessive temperature elevation of the lamp module 101 is named. The temperature sensor is originally configured to detect a temperature of heat transferred from the lamp casing 102, the lamp cover 104 and the like. However, when the temperature sensor is arranged in the vicinity of the gap through which air leaks, the temperature sensor directly detects a hot air temperature which is considerably higher than the heat transfer temperature from the lamp casing 102, the lamp cover 104 and the like. Accordingly, there arises a drawback that the emergent stop of the projector occurs frequently.

Such a drawback also arises in the same manner when the lower-side plate portion 104c of the lamp cover 104 which overlaps the lower-side surface of the lamp casing 102 is warped.

### SUMMARY OF THE INVENTION

The present invention has been made to overcome the above-mentioned drawbacks and it is an object of the present invention to provide a lamp module which can prevent inadvertent leaking of hot air generated by cooling a lamp.

A lamp module includes: a light source lamp, a lamp casing which houses the light source lamp therein; a lamp cover which includes a main plate portion which faces one side surface of the lamp casing and side-plate portions which respectively overlap two side surfaces of the lamp casing adjacent to one side surface of the lamp casing thus covering one side surface of the lamp casing; and a front-surface member which includes a projection which is brought into contact with an outer side of a front periphery of the main plate portion of the lamp cover, and a radiation opening through which light from the light source lamp is radiated and is mounted on a front surface of the lamp casing; wherein the lamp module further includes a first screw which fastens rear portions of respective side surfaces of the lamp casing and the respective side-plate portions of the lamp cover which overlap the rear portions of respective side surfaces of the lamp casing to each other in a state that the projection formed on the front-surface member is brought into contact with the outer side of the front periphery of the main plate portion of the lamp cover, and a second screw which fastens a front portion of at least one of the side surfaces of the lamp casing and the side-plate portion of the lamp cover which overlaps the front portion of at least one of the side surfaces of the lamp casing to each other in a state that the projection formed on the front-surface member is brought into contact with the outer side of the front periphery of the main plate portion of the lamp cover.

The above-mentioned and other objects and technical features of the present invention will become more apparent by reference to the following description with respect to preferred embodiments and attached drawings.

### DESCRIPTION OF THE DRAWINGS

Fig. 1 is a perspective view showing an appearance of a lamp module as viewed from a front side;
Fig. 2 is a perspective view showing an appearance of the lamp module as viewed from a rear side;
Fig. 3 is a perspective view showing an appearance of the lamp module as viewed from the rear side in an exploded manner;
Fig. 4 is a perspective view showing an appearance of a conventional lamp module as viewed from a front side;
Fig. 5 is a perspective view showing an appearance of the conventional lamp module as viewed from a rear side; and
Fig. 6 is a perspective view showing an appearance of the conventional lamp module as viewed from the rear side in an exploded manner.

### DESCRIPTION OF THE PREFERRED EMBODIMENTS

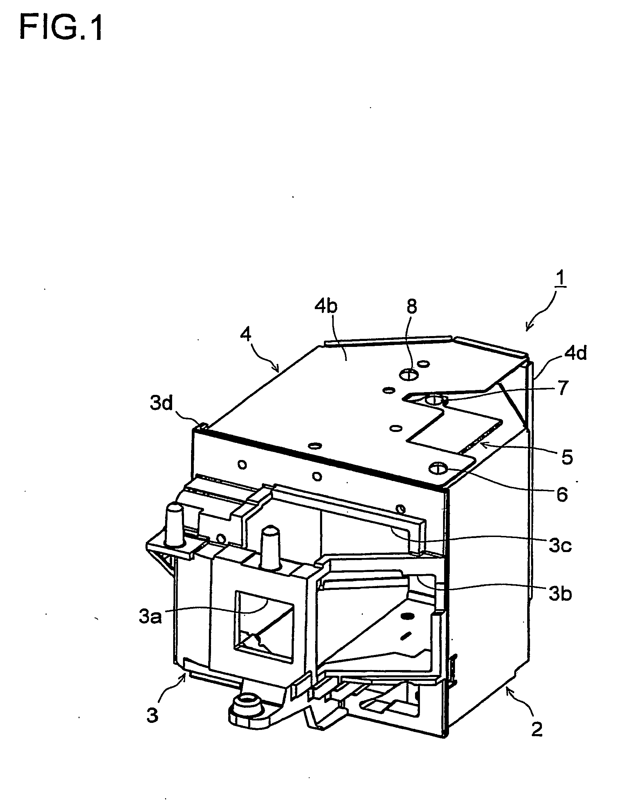

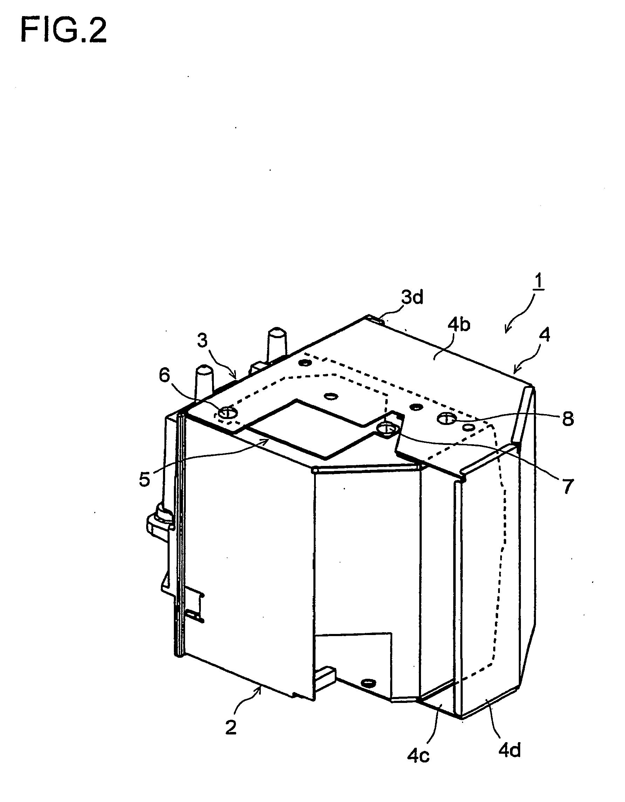

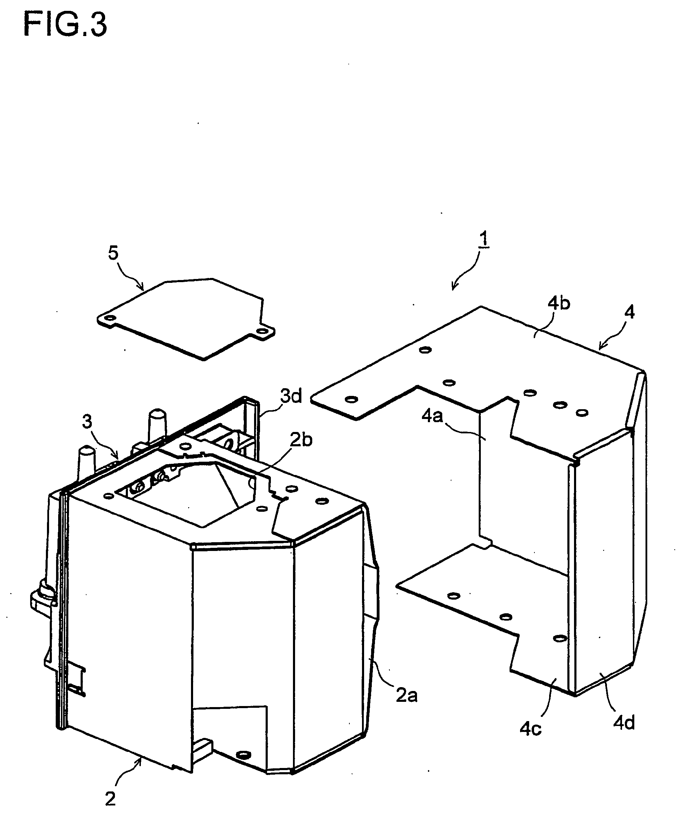

One embodiment of a lamp module is explained in detail hereinafter in conjunction with drawings. Fig. 1 is a perspective view showing an appearance of the lamp module of this embodiment as viewed from a front side of the lamp module. Fig. 2 is a perspective view showing the appearance of the lamp module as viewed from a rear side. Fig. 3 is perspective view showing the appearance of the lamp module as viewed from the rear side in an exploded manner.

As shown in Fig. 1 to Fig. 3, the lamp module 1 includes a lamp casing 2, a front-surface member 3 which is mounted on a front surface (a left viewer's-side surface in Fig. 1, and a left depth-side surface in Fig. 2 and Fig. 3) of the lamp casing 2, and a lamp cover 4 which covers one side surface, for example, a right side surface (a left-depth-side surface in Fig. 1, and a right-depth-side surface in Fig. 2 and Fig. 3) of the lamp casing 2.

The lamp casing 2 holds a light source lamp not shown in the drawing by housing the light source lamp therein. Here, the lamp casing 2 is formed of a metal sheet such as a bent aluminum plate (that is, the lamp casing 2 is formed of a sheet-metal formed product). Particularly, the lamp casing 2 is formed by laterally combining a pair of individual sheet-metal-formed parts. Further, the lamp casing 2 opens a front surface thereof and forms a gap 2a which is communicated with the inside and the outside by bulging a right-side surface thereof toward the outside in the back surface of the lamp casing 2 (see Fig. 3).

Further, the lamp casing 2 has an opening 2b in one of two, upper and lower surfaces which are arranged adjacent to the right-side surface covered with the lamp cover 4, for example, the upper surface (the upper-side surface in Fig. 1 to Fig. 3). In the vicinity of the opening 2b, that is, in the inside of the lamp casing 2 and in the vicinity of the upper surface, a connection terminal of the lamp is arranged. Accordingly, to ensure an insulation distance with respect to the connection terminal in view of requirements for safety standard, the opening 2b is formed. The opening 2b is covered with an insulation plate 5 made of a material such as liquid crystal polymer (LCP). Further, the insulation plate 5 and the upper-side surface of the lamp casing 2 in which the opening 2b is formed are fastened to each other by screws (second screws and third screws) 6 which are positioned at a left end of a front portion of the insulation plate 5 and screws (third screws) 7 which are positioned at a rear portion of the insulation plate 5 (although being explained later in detail, the screws 6 being also used for fastening the lamp cover 4).

The front-surface member 3 has a substantially rectangular frame shape. A radiation opening 3a for light emitted from the light source lamp is formed in an approximately frame-like center portion of the front-surface member 3 in a state that the radiation opening 3a projects slightly frontwardly. The front-surface member 3 is a metal injection molded product made of aluminum or the like. Further, behind the front-surface member 3, the lamp casing 2 is arranged in a leftwardly offset manner, and the front-surface member 3 and the lamp casing 2 are fastened to each other using screws (not shown in the drawings). Further, in the front-surface member 3, on the respective left and upper sides of the radiation opening 3a, a first ventilation port 3b and a second ventilation port 3c for introducing air into the inside of the lamp casing 2 are formed.

The lamp cover 4 is formed of a metal sheet such as a bent aluminum sheet (that is, the lamp cover 4 being formed of a metal-sheet formed product). Here, the lamp cover 4 includes a main plate portion 4a which faces a right side surface of the lamp casing 2 with a predetermined gap therebetween, and two side surfaces which are arranged adjacent to a right side surface of the lamp casing 2 and face each other, that is, an upper side-plate portion 4b and a lower side-plate portion 4c which overlap an upper side surface and a lower side surface of the lamp casing 2. Here, rear portions of the main plate portion 4a, the upper side-plate portion 4b and the lower side-plate portion 4c are closed by a back plate portion 4d, and a predetermined gap is defined between the back plate portion 4d and the rear surface of the lamp casing 2.

Particularly, the upper side-plate portion 4b of the lamp cover 4 which covers an upper side surface of the lamp casing 2 on which the insulation plate 5 is mounted has an area sufficient to allow the upper side-plate portion 4b to cover a front portion and a right portion of the insulation plate 5. To be more specific, the upper side-plate portion 4b largely extends a front portion thereof including a front periphery thereof leftwardly to reach a position of the screws (the screws on a front portion side of the insulation plate 5) 6 which fasten the insulation plate 5 to the lamp casing 2.

Further, on a back surface of the front-surface member 3, a projection 3d which projects rearwardly while extending along a right side periphery of the back surface of the front-surface member 3 is formed. Further, with respect to the lamp cover 4, by applying the projection 3d formed on the front-surface member 3 to the outer side of the front periphery of the main plate portion 4a while bringing the main plate portion 4a, the upper side-plate portion 4b and the lower side-plate portion 4c into contact with the back surface of the front-surface member 3, it is possible to temporarily assemble the lamp casing 2 which mounts the front-surface member 3 thereon and the lamp cover 4. Further, screws (first screws) 8 fasten the upper side-plate portion 4b and a rear portion of the upper side surface of the lamp casing 2 to which the upper side-plate portion 4b is overlapped. Further, the screws 6 fasten the upper side-plate portion 4b of the lamp cover 4 and the front portion of the upper side surface of the lamp casing 2 to each other by way of the insulation plate 5 (that is, the screws 6 fastening both of the insulation plate 5 and the upper side-plate portion 4b of the lamp cover 4 together to the upper side surface of the lamp casing 2). Further, screws not shown in the drawing fasten another lower side-plate portion 4c of the lamp cover 4 and a front portion and a rear portion of the lower side surface of the lamp casing 2 to which the lower side-plate portion 4c is overlapped. Due to such fastening, the lamp cover 4 is mounted on the lamp casing 2.

Due to such constitution, the screws 6 which are positioned at the front portion of the upper side surface of the lamp casing 2 and the screws 8 which are positioned at the rear portion of the upper side surface of the lamp casing 2 fasten the lamp casing 2 and the lamp cover 4 which overlaps the upper side surface of the lamp casing 2. Accordingly, even when the upper side-plate portion 4b of the lamp cover 4 attempts to warp from the upper side surface of the lamp casing 2, the upper side-plate portion 4b cannot float from the upper side surface. As a result, a close contact state between the upper side-plate portion 4b of the lamp cover 4 and the upper side surface of the lamp casing 2 can be maintained. On the other hand, also with respect to the lower side-plate portion 4c of the lamp cover 4 which overlaps the lower side surface of the lamp casing 2, the front portion and the rear portion of the lower side surface of the lamp casing 2 are respectively fastened to each other by screws and hence, it is possible to bring the lower side-plate portion 4c of the lamp cover 4 and the lower side surface of the lamp casing 2 into a close contact state in the same manner.

Further, in such a lamp module 1, air which is sucked into the inside of the projector body from the outside during driving of the projector is introduced into the inside of the lamp casing 2 through the first ventilation port 3b and the second ventilation port 3c formed in the front-surface member 3 due to a fan, a blower or the like. The introduced air flows around the lamp, and is led to the back plate portion 4d of the lamp cover 4 through the gap 2a formed in the rear surface of the lamp casing 2. Along with such an air flow, air flows from the front side to the rear side between the right-side surface of the lamp casing 2 and the main plate portion 4a of the lamp cover 4, and is led to a space defined between the rear surface of the lamp casing 2 and the back plate portion 4d of the lamp cover 4. In such a process, air deprives heat from the lamp and the lamp casing 2 and generates hot air. Then, the hot air which is led to a space defined between the rear surface of the lamp casing 2 and the back plate portion 4d of the lamp cover 4 is discharged to the outside by a fan or the like. The lamp is cooled in this manner.

In such a case, attributed to the fact that, in the lamp module 1, the front portion and the rear portion of the upper side surface of the lamp casing 2 and the upper side-plate portion 4b of the lamp cover 4 which overlaps the front portion and the rear portion of the upper side surface of the lamp casing 2 are fastened to each other by the screws 6 and the screws 8 respectively, the upper side surface of the lamp casing 2 and the upper side-plate portion 4b of the lamp cover 4 are brought into close contact with each other. Accordingly, there is no possibility that hot air which flows from a front side to a rear side between the right side surface of the lamp casing 2 and the main plate portion 4a of the lamp cover 4 inadvertently leaks and hence, hot air is discharged by way of an expected path. That is, it is possible to prevent inadvertent leaking of hot air generated by cooling the lamp. Here, the same goes for the relationship between the lower side surface of the lamp casing 2 and the lower side-plate portion 4c of the lamp cover 4. Accordingly, parts arranged in the vicinity of the lamp module 1 are not ill-affected by inadvertent leaking of hot air.

Here, the present invention is not limited to the above-mentioned embodiment and various modifications are conceivable without departing from the gist of the present invention. For example, in the above-mentioned embodiment, in mounting of the upper side surface and the lower side surface of the lamp casing 2 and the upper side-plate portion 4b and the lower side-plate portion 4c of the lamp cover 4, the screws 6 and the screws 8 are positioned at the front portions and the rear portions of the upper side surface and the lower side surface of the lamp casing 2. However, the present invention is not limited to such mounting. For example, provided that there are no parts which are liable to be easily ill-affected by heat in the vicinity of the front portion of the upper side surface of the lamp casing 2, it is not always necessary to perform fastening by the screws 6. Further, provided that the safety standard on insulation is originally satisfied, it is unnecessary to form the opening 2b in the upper side-plate portion 4b of the lamp cover 4 and, at the same time, the insulation plate 5 becomes unnecessary. When such an insulation plate 5 becomes unnecessary, the front portion of the upper side surface of the lamp casing 2 and the upper side-plate portion 4b of the lamp cover 4 may be fastened to each other by other screws different from the screws 8 arranged at the rear portion of the upper side surface of the lamp casing 2. It is needless to say that even when mounting of the insulation plate 5 is necessary, the front portion of the upper side surface of the lamp casing 2 and the front portion of the upper side-plate portion 4b of the lamp cover 4 may be fastened to each other by another screws irrelevant to the mounting of the insulation plate 5. However, from a viewpoint of maintaining operation efficiency while suppressing the number of screws, it is desirable to perform co-fastening using one screw.

Further, the lamp casing 2, the front surface member 3 and the like may be formed of an injection molded product made of a hard resin. As a matter of course, when the lamp casing 2 is made of an insulating resin, it is unnecessary to form the opening 2b and the insulation plate 5. Further, the lamp module 1 having the above-mentioned constitution is used effectively in various projectors.

Here, the lamp module 1 which has been explained heretofore may be also expressed as follows.

The lamp module includes the light source lamp, the lamp casing, the lamp cover, the front-surface member and the first screw.

The light source lamp emits light, and the lamp casing houses the light-source lamp. The lamp cover includes the main plate portion which faces one side surface of the lamp casing, and the side plate portions which respectively overlap two side surfaces of the lamp casing adjacent to one side surface of the lamp casing, wherein the lamp cover covers one side surface of the lamp casing.

The front surface member includes the projection which is brought into contact with the outer side of the front periphery of the main plate portion of the lamp cover and the radiation opening for radiating light from the light source lamp, and may be mounted on the front surface of the lamp casing.

The first screw fastens the rear portions of the respective side surfaces of the lamp casing and the respective side-plate portions of the lamp cover which overlap the rear portions of the respective side surfaces of the lamp casing to each other in a state that the projection formed on the front surface member and the outer side of the front periphery of the main plate portion in the lamp cover are brought into contact with each other.

The second screw fastens the front portion of at least one side surface of the lamp casing and the side-plate portion of the lamp cover which overlaps the front portion of at least one side surface of the lamp casing to each other.

That is, the lamp module includes the lamp casing which houses the light source lamp therein, the lamp cover which includes the main plate portion which faces one side surface of the lamp casing and side-plate portions which respectively overlap two side surfaces of the lamp casing adjacent to one side surface of the lamp casing, and covers one side surface of the lamp casing, and the front-surface member which includes a projection which is brought into contact with an outer side of a front periphery of the main plate portion of the lamp cover, and the radiation opening through which light from the light source lamp is radiated , and is mounted on the front surface of the lamp casing.

Here, in such a lamp module, in a state that the projection formed on the front-surface member is brought into contact with the outer side of the front periphery of the main plate portion, the rear portions of respective side surfaces of the lamp casing and the respective side-plate portions of the lamp cover which overlap the rear portions of respective side surfaces of the lamp casing are fastened to each other by the first screws, and the front portion of at least one side surface of the lamp casing and the side-plate portion of the lamp cover which overlaps the front portion of at least one side surface of the lamp casing are fastened to each other by the second screws.

According to the lamp module having the above-mentioned constitution, the rear portions and the front portions of the respective side surfaces of the lamp casing and the respective side-plate portions of the lamp cover which overlap such rear portions and front portions of the respective side surfaces of the lamp casing are fastened to each other by the first screws and the second screws. Accordingly, the side plate portions of the lamp cover and the side surfaces of the lamp casing are brought into a close contact state and hence, there is no possibility that hot air which flows in the inside of the lamp casing inadvertently leaks whereby hot air is discharged by way of an expected path. That is, with the use of such a lamp module, it is possible to prevent inadvertent leaking of hot air generated by cooling the lamp.

Here, the side-plate portion of the lamp cover may preferably have a portion which extends to reach the second screw. The lamp cover may preferably be formed of a bent metal sheet. The front-surface member may preferably be formed of a metal injection molded product.

Further, the lamp casing may preferably be formed of a bent metal sheet. However, to satisfy requirements set in view of the safety standard on insulation, it is necessary to ensure a distance between the connection terminals of the lamp and the lamp casing, that is, an insulation distance. Accordingly, when the lamp casing is made of metal, it is desirable to form an opening in at least one side surface of the lamp casing, and to provide an insulation plate which covers the opening and a third screw which fastens the insulation plate which covers the opening and the side surface of the lamp casing which forms the opening therein. It is particularly desirable that the third screw is arranged at the front portion and the rear portion of the insulation plate.

Further, it is desirable that the side-plate portion of the lamp cover which overlaps the side surface of the lamp casing in which the opening is formed may preferably extend to overlap at least the front portion of the insulation plate, and the third screw which fastens the front portion of the insulation plate and the side surface of the lamp casing in which the opening is formed also functions as the second screw which fastens the front portion of the side surface of the lamp casing in which the opening is formed and the side-plate portion of the lamp cover which overlaps the front portion of the side surface of the lamp casing.

That is, it is desirable that the side plate portion of the lamp cover overlaps at least the front portion of the insulation plate, and fastening of the front portion of the side surface of the lamp casing and the side-plate portion of the lamp cover using the screw also enables fastening of the front portion of the insulation plate and the front portion of the side surface of the lamp casing (co-fastening using the screw being desirable). Due to such constitution, it is possible to decrease the number of screws used in the lamp module.

The specific embodiment, modifications and the like which have been explained heretofore are provided exclusively for clarifying the technical contents of the present invention. Accordingly, the present invention should not be construed narrowly by limiting the present invention to the specific examples and the present invention can be exercised in various forms within the scope of attached claims.

## Claims

1. A lamp module comprising:
a light source lamp;
a lamp casing (2) which houses the light source lamp therein;
a lamp cover (4) which includes a main plate portion (4a) which faces one side surface of the lamp casing (2) and side-plate portions (4b, 4c) which respectively overlap two side surfaces of the lamp casing (2) adjacent to one side surface of the lamp casing (2), and covers one side surface of the lamp casing (2);
a front-surface member (3) which includes a projection (3d) which is brought into contact with an outer side of a front periphery of the main plate portion (4a) of the lamp cover (4), and a radiation opening (3a) through which light from the light source lamp is radiated and is mounted on a front surface of the lamp casing (2),
**characterized in that**
in a state that the projection (3d) formed on the front-surface member (3) is brought into contact with the outer side of the front periphery of the main plate portion (4a),
rear portions of respective side surfaces of the lamp casing (2) and the respective side-plate portions (4b, 4c) of the lamp cover (4) which overlap the rear portions of respective side surfaces of the lamp casing (2) are fastened to each other by a first screw (8), and
a front portion of at least one of the side surfaces of the lamp casing (2) and the side-plate portion (4b) of the lamp cover (4) which overlaps the front portion of at least one of the side surfaces of the lamp casing (2) are fastened to each other by a second screw (6).

2. A lamp module (1) according to claim 1, wherein the side-plate portion (4b) of the lamp cover (4) has a portion which extends to reach the second screw (6).

3. A lamp module (1) according to claim 1 or claim 2, wherein the lamp cover (4) is formed of a bent metal sheet.

4. A lamp module (1) according to any one of claim 1 to claim 3, wherein the front-surface member (3) is formed of a metal injection molded product.

5. A lamp module (1) according to any one of claim 1 to claim 4, wherein the lamp casing (2) is formed of a bent metal sheet.

6. A lamp module (1) according to claim 5, wherein an opening (2b) is formed in at least one side surface of the lamp casing (2), and includes an insulation plate (5) which covers the opening (2b), and third screws (6,7) which fasten the insulation plate (5) which covers the opening (2b) and the side surface of the lamp casing (2) which forms the opening (2b) therein.

7. A lamp module (1) according to claim 6, wherein the third screws (6,7) are positioned at a front portion and a rear portion of the insulation plate (5).

8. A lamp module (1) according to claim 7, wherein the side-plate portion (4b) of the lamp cover (4) which overlaps the side surface of the lamp casing (2) in which the opening (2b) is formed extends to overlap at least the front portion of the insulation plate (5), and
the third screw (6) which fastens the front portion of the insulation plate (5) and the side surface of the lamp casing (2) in which the opening (2b) is formed also functions as the second screw (6) which fastens the front portion of the side surface of the lamp casing (2) in which the opening (2b) is formed and the side-plate portion (4b) of the lamp cover (4) which overlaps the front portion of the side surface of the lamp casing (2).
